(19) Europäisches Patentamt
European Patent Office
Office européen des brevets

(11) Publication number: **0 012 148**
**B1**

# (12) EUROPEAN PATENT SPECIFICATION

(45) Date of publication of patent specification: **17.04.85**

(51) Int. Cl.[4]: **C 08 F 10/02,** C 08 F 4/64, C 08 F 2/34

(21) Application number: **79100956.6**

(22) Date of filing: **30.03.79**

## (54) Process for the preparation of high density ethylene polymers in fluid bed reactor.

(30) Priority: **14.12.78 US 969588**
**16.02.79 US 12719**

(43) Date of publication of application:
**25.06.80 Bulletin 80/13**

(45) Publication of the grant of the patent:
**17.04.85 Bulletin 85/16**

(84) Designated Contracting States:
**BE CH DE FR GB IT NL SE**

(56) References cited:
**FR-A-2 378 046**
**GB-A-1 352 718**
**US-A-3 989 881**
**US-A-4 035 560**
**US-A-4 124 532**

(73) Proprietor: **UNION CARBIDE CORPORATION**
**Old Ridgebury Road**
**Danbury Connecticut 06817 (US)**

(72) Inventor: **Goeke, George Leonard**
**Hiland Drive**
**Belle Mead, NJ (US)**
Inventor: **Wagner, Burkhard Eric**
**40 Lawrence Avenue**
**Highland Park, NJ (US)**
Inventor: **Karol, Frederick John**
**Hiland Drive**
**Belle Mead New Jersey (US)**

(74) Representative: **Schmied-Kowarzik, Volker, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 012 148 B1

**Description**

The invention relates to the catalytic homopolymerization and copolymerization of ethylene with high activity Mg and Ti containing complex catalysts in a low pressure gas phase fluid bed process to produce polymers having a density of ≥0.95 to ≤0.97 g/cm$^3$, a melt flow ratio of ≥22 to ≤32 and having a relatively round particle shape and a relatively low level of fines.

Ethylene homopolymers having a density of ≥0.96 g/cm$^3$ and a melt index in the range of 5 to 50 g/10 min are useful for injection molding purposes requiring excellent impact strength properties provided that they have a relatively narrow molecular weight distribution. Ethylene polymers having a density of ≥0.96 g/cm$^3$ and a melt index of ≤20 g/10 min can be made with the catalysts and low pressure gas phase processes described in US—A—3,023,203, 4,003,712 and 3,709,853. The polymers made with the supported chromium oxide, silylchromate and chromocene catalysts, however, have a relatively broad molecular weight distribution as evidenced by melt flow ratio values of ≥35. The polymers of these patents, therefore, have relatively limited use for injection molding applications requiring excellent impact strength properties. It is desirable therefore, to provide catalysts which would enable one to readily prepare, in a gas phase process, ethylene polymers which have a relatively narrow molecular weight distribution.

To be commercially useful in a gas phase process, such as the fluid bed process of US—A—3,709,853, 4,003,712 and 4,011,382, and CA—A—991,798 and BE—A—839,380, the catalyst employed must be a high activity catalyst, that is, it must have a level of productivity of ≥50,000, preferably ≥100,000, kg of polymer per kg of primary metal in the catalyst. This is so because such gas phase processes usually do not employ any catalyst residue removing procedures.

Thus, the catalyst residue in the polymer must be so small that it can be left in the polymer without causing any undue problems in the hands of the resin fabricator and/or ultimate consumer. Low catalyst residue contents are also important where the catalyst is made with chlorine containing materials such as the titanium, magnesium and/or aluminum chlorides used in some so-called Ziegler or Ziegler-Natta catalysts. High residual chlorine values in a molding resin will cause pitting and corrosion on the metal surfaces of the molding devices. Cl residues of the order of ≥200 ppm are not commercially useful.

US—A—3,989,881 discloses the use of a high activity catalyst for the manufacture, under slurry polymerization conditions, of ethylene polymers having a relatively narrow molecular weight distribution (Mw/Mn) of about 2.7 to 3.1. Attempts were made to use catalysts similar to those described in US—A—3,989,881 for the purpose of making polyethylene of narrow molecular weight distribution by polymerizing ethylene alone or with propylene in the gas phase in a fluid bed process using apparatus and conditions similar to those employed in US—A—4,011,382 and BE—A—839,380. These attempts were not successful. In order to avoid the use of the solvents in the slurried catalyst systems of US—A—3,989,881, the Ti/Mg containing components were dried. However, the dried material, a viscous, gummy, pyrophoric composition, could not be readily fed to the reactor because it was not in a free flowing form. Even when blended with silica to improve its free-flowing properties and then added to the reactor the results were commercially unacceptable. The productivity of the catalyst was poor, or the catalyst was pyrophoric and difficult to handle or the polymer product was produced in the form of needle-shaped products which were difficult to fluidize and which exhibited very poor flow properties.

US—A—3,922,322 and 4,035,560 disclose the use of several Ti and Mg containing catalysts for the manufacture of granular ethylene polymers in a gas phase fluid bed process under a pressure ≤69 bar (≤1000 psi). The use of these catalysts in these processes, however, has significant disadvantages. The catalysts of US—A—3,922,322 provide polymers having a very high catalyst residue content, i.e., about 100 ppm of Ti and greater than about 300 ppm Cl, according to the working example of this patent. Further, as disclosed in the working example of US—A—3,922,322, the catalyst is used in the form of a prepolymer, and very high volumes of the catalyst composition must be fed to the reactor relative to the volume of polymer made in the reactor. The preparation and use of this catalyst thus requires the use of relatively large sized equipment for the manufacture, storage and transporting of the catalyst.

The catalysts of US—A—4,035,560 also apparently provide polymers having high catalyst residues, and the catalysts compositions are apparently pyrophoric because of the types and amounts of reducing agents employed in such catalysts. Furthermore this reference does not disclose the necessity of the use of electron donors, let alone the fact that a special amount of electron donor must be present to yield a fluid bed process with improved results.

US—A—4,124,532 discloses the polymerization of ethylene and propylene with high activity catalysts. These catalysts comprise complexes which may contain magnesium and titanium. These complexes are prepared by reacting the halide $MX_2$ (where M may be Mg) with a compound M′Y (where M′ may be Ti and Y is halogen or an organic radical) in an electron donor compound. These complexes are then isolated by either crystallization, by evaporation of the solvent or by precipitation.

Polymerization is carried out with these catalytic complexes and an alkyl aluminum compound.

However, US—A—4,124,532 does not disclose any special techniques or methods of preparing the catalyst in order to achieve the desirable results described in the present invention. The use of the catalysts described in US—A—4,124,532, without these special methods, would not lead to a commercial fluid bed process to produce polyethylenes at commercial rates. In addition, the examples in the gas phase, do not

describe a practical process of copolymerization to produce copolymers with attractive polymer morphology as described in the present invention.

EPC-Application Serial 79 100 758.2 discloses that ethylene copolymers, having a density of ≥0.91 to ≤0.94 g/cm$^3$ and a melt flow ratio of ≥22 to ≤32 and which have a relatively low residual catalyst content and a relatively high bulk density and which provide films of good clarity can be produced at relatively high productivities for commercial purposes by a gas phase fluid bed process if the ethylene is copolymerized with one or more $C_3$ to $C_6$ α-olefins in the presence of a high activity magnesium-titanium containing complex catalyst prepared under specific activation conditions with an organoaluminum compound and impregnated in a porous inert carrier material.

In the catalyst activation procedure the activation is conducted in at least two stages. In the first stage the precursor composition, impregnated in the silica, is reacted with, and partially activated by, enough activator compound so as to provide a partially activated precursor composition which has an activator compound/Ti molar ratio of >0 to <10:1 and preferably of 4 to 8:1. In order to render the partially activated and impregnated precursor composition active for ethylene polymerization purposes, additional activator compound must also be added to the polymerization reactor to complete, in the reactor, the activation of the precursor composition. The additional activator compound and the partially activated impregnated precursor composition are preferably fed to the reactor through separate feed lines. The additional activator compound may be sprayed into the reactor in the form of a solution thereof in a hydrocarbon solvent such as isopentane, hexane, or mineral oil. This solution usually contains 2 to 30 weight percent of the activator compound.

However, the activity of the impregnated catalysts as prepared according to the procedure as described in EPC-Application 79 100 958.2 is at times not high enough to produce ethylene homopolymers or copolymers of high melt index (≥1.0) with a density ≥0.95 and obtain a relatively round particle shape and a relatively low level of fines. Precursor compositions in which q=1.5m+2 (see below) when activated in a two stage process exhibited lower polymerization activity (Table III).

EPC-Application 79 100 957.4 discloses that ethylene homopolymers having a density range of 0.96 to 0.97 g/cm$^3$ and a melt flow ratio of ≥22 to ≤32 and which have a relatively low residual catalyst residue can be produced at relatively high productivities for commercial purposes by a low pressure gas phase fluid bed process if the ethylene is homopolymerized in the presence of a high activity magnesium-titanium complex catalyst blended with an inert carrier material. However, the polymers produced with this blended catalyst have the disadvantage that the polymer particles formed during the fluid bed polymerization process are irregular in shape and are somewhat difficult to fluidize. Also, the final product contains a relatively high level of fines, i.e., particles having a particle size of ≤125 μm.

It has now been unexpectedly found that ethylene homopolymers and copolymers having a density range of ≥0.95 to ≤0.97 g/cm$^3$ and a melt flow ratio of ≥22 to ≤32 can be produced at relatively high productivities at a relatively high bulk density, with relatively low level of fines and with a relatively round particle shape. These polymers can be produced commercially by a low pressure gas phase fluid bed process if the ethylene is homopolymerized or copolymerized in the presence of a high activity magnesium titanium complex catalyst prepared as described below, and impregnated in selected amounts in a porous inert carrier material and activated under specific conditions in the polymerization reactor.

An object of the present invention is to provide a process for producing, at relatively high productivities and in a low pressure gas phase fluid bed process, ethylene homopolymers and copolymers which have a density of ≥0.95 to ≤0.97 g/cm$^3$, a melt flow ratio of ≥22 to ≤32, a relatively low residual catalyst content and a bulk density of 0.3 to 0.5 g/cm$^3$ (21 to 32 pounds per cubic foot).

Another object of the present invention is to provide granular ethylene polymers which have a particle shape which is round and wherein the final polymer product contains a relatively low level of fines (particles ≤125 μm).

It has now been found that granular ethylene homopolymers and copolymers having a density of ≥0.95 to ≤0.97 g/cm$^3$ and a melt flow ratio of ≥22 to ≤32 can be produced at high productivities in a low pressure gas phase fluid bed process by homopolymerizing ethylene or copolymerizing ethylene with an α-olefin having from 3 to 8 carbon atoms by contacting the monomer charge with a catalyst composition formed from an organoaluminum activator compound and a precursor compound of the formula

$$Mg_mTi(OR)_nX_p[ED]_q$$

wherein

ED is a selected electron donor compound

m is ≥0.5 to ≤56

n is 0, 1 or 2

p is ≥2 to ≤116

q=1.5m+2

R is a $C_1$ to $C_{14}$ aliphatic or aromatic hydrocarbon radical, or COR′ wherein R′ is a $C_1$ to $C_{14}$ aliphatic or aromatic hydrocarbon radical, and

X is selected from the group consisting of Cl, Br, I or mixtures thereof,

which precursor composition is impregnated in a porous inert carrier, and wherein said precursor

composition is activated completely in the polymerization reactor by feeding dry solid impregnated precursor composition into the reactor and adding activator compound to said reactor to effect said activation.

The ethylene polymers which can be produced by the claimed process have a melt flow ratio of ≥22 to ≤32, and preferably of ≥25 to ≤30. The melt flow ratio value is another means of indicating the molecular weight distribution of a polymer. The melt flow ratio (MFR) range of ≥22 to ≤32 thus corresponds to a Mw/Mn value range of 2.7 to 4.1 and the MFR range of ≥25 to ≤30 corresponds to a Mw/Mn range of 2.8 to 3.6.

The copolymers which may be prepared in the process of the present invention are copolymers of a major mol percent (≥98%) of ethylene, and a minor mol percent (≤2%) of one (copolymer) or more (ter-, tetra-polymers) $C_3$ to $C_8$ α-olefins. The $C_3$ to $C_8$ α-olefins should not contain any branching on any of their carbon atoms which is closer than the fourth carbon atom.

These α-olefins include propylene, butene-1, pentene-1, hexene-1, 4-methyl pentene-1, heptene-1 and octene-1. The preferred α-olefins are propylene, butene-1, hexene-1, 4-methyl pentene-1 and octene-1.

The ethylene polymers obtained by the present invention have a density of ≥0.95 to ≤0.97 g/cm³, preferably from 0.955 to 0.970 g/cm³. The density of the copolymer, at a given melt index level for the copolymer, is primarily regulated by the amount of the $C_3$ to $C_8$ comonomer which is copolymerized with the ethylene. In the absence of the comonomer, the ethylene would homopolymerize with the catalyst of the present invention to provide homopolymers having a density of ≥0.96 g/cm³. Thus, the addition of progressively larger amounts of the comonomers to the reactor results in a progressive lowering of the density of the copolymer. The amount of each of the various $C_3$ to $C_8$ comonomers needed to achieve the same result will vary from comonomer to comonomer, under the same conditions.

Thus, to achieve the same results, in the copolymers, in terms of a given density, at a given melt index level, larger molar amounts of the different comonomers would be needed in the order of $C_3>C_4>C_5>C_6>C_7>C_8$.

The melt index of a homopolymer or copolymer is a reflection of its molecular weight. Polymers having a relatively high molecular weight, have a relatively low melt index. Ultra-high molecular weight ethylene polymers have a high load (HLMI) melt index of about 0.0 and very high molecular weight ethylene polymers have a high load melt index (HLMI) of about 0.0 to 1.0. Such high molecular weight polymers are difficult, if not impossible, to mold in conventional injection molding equipment. The polymers made in the process of the present invention, on the other hand, can be readily molded, in such equipment. They have a standard or normal load melt index of ≥0.0 to 100, and preferably of 0.5 to 80, and a high load melt index (HLMI) of 11 to 2000. The melt index of the polymers which are made in the process of the present invention is a function of a combination of the polymerization temperature of the reaction, the density of the copolymer and the hydrogen/monomer ratio in the reaction system. Thus, the melt index is raised by increasing the polymerization temperature and/or by decreasing the density of the polymer and/or by increasing the hydrogen/monomer ratio. In addition to hydrogen other chain transfer agents such as dialkyl zinc compounds may also be used for further increase the melt index of the polymers.

The polymers obtained according to the present invention have an unsaturated group content of ≤1, and usually ≥0.1 to ≤0.3, C=C/1000 carbon atoms, and a cyclohexane extractables content of less than 3, and preferably less than 2, weight percent.

The polymers obtained according to the present invention have a residual catalyst content, in terms of parts per million of titanium metal, of less than 200 parts per million (ppm) at a productivity level of ≥50,000 kg of polymer per kg of titanium. In terms of Cl, Br or I residues, the polymers obtained according to the present invention typically have a residue content (Cl, Br or I/Ti=7) of less than 140 ppm at a productivity of ≥50,000 kg of polymer per kg of titanium.

The polymers prepared according to the present invention are granular materials which have an average particle size of the order of 0.5 to 1.25 mm (0.02 to 0.05 inches), and preferably of 0.5 to 1.0 mm (0.02 to 0.04 inches), in diameter. The particle size is important for the purposes of readily fluidizing the polymer particles in the fluid bed reactor, as described below. These granular materials also have a low level of fines (≤4.0 percent of the total polymer product) and these fines are ≤125 µm. Also, these granular materials exhibit a much more spherical shape (as observed by optical microscopy) than the granular materials described in EPC-Application 79 100 957.4.

The polymers of the present invention have a bulk density of 0.3 to 0.5 g/cm³ (21 to 32 pounds per cubic foot).

The compounds used to form the high activity catalyst used in the present invention comprise at least one titanium compound, at least one magnesium compound, at least one electron donor compound, at least one activator compound and at least one inert carrier material, as defined below.

The titanium compound has the structure

$$Ti(OR)_aX_b$$

wherein R is a $C_1$ to $C_{14}$ aliphatic or aromatic hydrocarbon radical, or COR' where R' is a $C_1$ to $C_{14}$ aliphatic or aromatic hydrocarbon radical,

X is selected from the group consisting of Cl, Br, I or mixtures thereof, a is 0, 1 or 2, b is 1 to 4 inclusive and a+b=3 or 4.

R and R' are especially $C_{1-8}$ and preferably $C_{1-6}$ alkyl or $C_{6-10}$ aryl residues; e.g. methyl, ethyl, propyl, i-propyl, butyl, i-butyl, pentyl, hexyl, octyl, i-octyl; phenyl, tolyl, xylyl, ethylphenyl, naphthyl.

The titanium compounds can be used individually or in combinations thereof, and would include $TiCl_3$, $TiCl_4$, $Ti(OC_6H_5)Cl_3$, $Ti(OCOCH_3)Cl_3$ and $Ti(OCOC_6H_5)Cl_3$.

The magnesium compound has the structure

$$MgX_2$$

wherein X is selected from the group consisting of Cl, Br, I, or mixtures thereof. Such magnesium compounds can be used individually or in combinations thereof and would include $MgCl_2$, $MgBr_2$ and $MgI_2$. Anhydrous $MgCl_2$ is the particularly preferred magnesium compound.

From 0.5 to 56, and preferably from 1 to 10 moles of the magnesium compound are used per mol of the titanium compound in preparing the catalysts employed in the present invention.

The titanium compound and the magnesium compound should be used in a form which will facilitate their dissolution in the electron donor compound, as described herein below.

The electron donor compound is an organic compound which is liquid at 25°C and in which the titanium compound and the magnesium compound are soluble. The electron donor compounds are known as such, or as Lewis bases.

The electron donor compounds used are alkyl esters of aliphatic and aromatic carboxylic acids, aliphatic ethers, cyclic ethers and aliphatic ketones. Among these electron donor compounds the preferable ones are alkyl esters of $C_1$ to $C_4$ saturated aliphatic carboxylic acids; alkyl esters of $C_7$ to $C_8$ aromatic carboxylic acids; $C_2$ to $C_8$, and most preferably $C_3$ to $C_4$, aliphatic esters; $C_3$ to $C_4$ cyclic ethers, and most preferably $C_4$ cyclic mono- or di-ethers; $C_3$ to $C_6$, and most preferably $C_3$ to $C_4$, aliphatic ketones. The most preferred of these electron donor compounds would include methyl formate, ethyl acetate, butyl acetate, ethyl ether, hexyl ether, tetrahydrofuran, dioxane, acetone and methyl isobutyl ketone.

The electron donor compounds can be used individually or in combinations thereof.

The activator compound has the structure $AlR_3$ wherein the R's are the same or different and are $C_1$ to $C_{14}$ saturated hydrocarbon radicals.

The R's are especially saturated aliphatic $C_{1-14}$ residues or saturated cycloaliphatic residues with preferably 5—10 carbon atoms as cyclopentyl, cyclohexyl, cycloheptyl, methylcyclohexyl.

Such activator compounds can be used individually or in combinations thereof and would include $Al(C_2H_5)_3$, $Al(i{-}C_4H_9)_3$, and $Al(C_6H_{13})_3$.

From 10 to 400, and preferably from 15 to 60, mols of the activator compound are used per mol of the titanium compound in activating the catalysts employed in the present invention.

The carrier materials are solid, particulate porous materials which are inert to the other components of the catalyst composition, and to the other active components of the reaction system. These carrier materials would include inorganic materials such as oxides of silicon and/or aluminum. The carrier materials are used in the form of dry powders having an average particle size of 10 to 250, and preferably of 50 to 150 μm.

These materials are also porous and have a surface area of ≥3, and preferably of ≥50, square meters per gram. Catalyst activity or productivity is apparently also improved with silica having pore sizes of ≥8 nm, and preferably of ≥10 nm. The carrier material should by dry, that is, free of absorbed water. Drying of the carrier material is carried out by heating it at a temperature of ≥600°C. Alternatively, the carrier material dried at a temperature of ≥200°C may be treated with 1 to 8 weight percent of one or more of the aluminum alkyl compounds described above. This modification of the carrier material by the aluminum alkyl compounds provides the catalyst composition with increased activity and also improves polymer particle morphology of the resulting ethylene polymers.

The catalyst in the present invention is prepared by first preparing a precursor composition from the titanium compound, the magnesium compound, and the electron donor compound, as described below, and then impregnating the carrier material with the precursor composition and treating the impregnated precursor composition with the activator compound as described below.

The precursor composition is formed by dissolving the titanium compound and the magnesium compound in the electron donor compound at a temperature of 20°C up to the boiling point of the electron donor compound. The titanium compound can be added to the electron donor compound before or after the addition of the magnesium compound, or concurrent therewith. The dissolution of the titanium compound and the magnesium compound can be facilitated by stirring, and in some instances by refluxing these two compounds in the electron donor compound. After the titanium compound and the magnesium compound are dissolved, the precursor composition may be isolated by crystallization or by precipitation with a $C_5$ to $C_8$ aliphatic or aromatic hydrocarbon such as hexane, isopentane or benzene.

The crystallized or precipitated precursor composition may be isolated, in the form of fine, free flowing particles having an average particle size of 10 to 100 μm and a settled bulk density of 0.3 to 0.5 g/cm$^3$ (18 to 33 pounds per cubic foot).

The precursor composition is then impregnated, in a weight ratio of 0.033 to 1, and preferably 0.1 to 0.43, parts of the precursor composition into one part by weight of the carrier material.

The impregnation of the dried (activated) carrier with the precursor composition may be accomplished by dissolving the precursor composition in the electron donor compound, and by then admixing the carrier with the dissolved precursor composition so as to allow the precursor composition to impregnate the carrier. The solvent is then removed by drying at temperatures of ≤70°C.

The carrier may also be impregnated with the precursor composition by adding the carrier to a solution of the chemical raw materials used to form the precursor composition in the electron donor compound, without isolating the precursor composition from such solution. This represents the preferred method because of its simplicity. The excess electron donor compound is then removed by drying at a temperature of ≤70°C.

In the drying process it is necessary to control the level of the electron donor $[ED]_q$ to such an extent that the final value of $q=1.5m+2$. This procedure involves careful drying of the precursor and considerable care must be exercised to avoid overdrying and hence decomposition of the precursor.

When thus made as disclosed above the impregnated precursor composition has a formula

$$Mg_mTi(OR)_nX_p[ED]_q$$

wherein

ED is the electron donor compound,

m is ≥0.5 to ≤56, and preferably ≥1.5 to ≤5,

n is 0, 1 or 2,

p is ≥2 to ≤116, and preferably ≥6 to ≤14,

$q=1.5m+2$

R is a $C_1$ to $C_{14}$ aliphatic or aromatic hydrocarbon radical, or COR' wherein R' is a $C_1$ to $C_{14}$ aliphatic or aromatic hydrocarbon radical and,

X is selected from the group consisting of Cl, Br, I, or mixtures thereof.

In order to render the impregnated precursor composition useful for ethylene polymerization purposes, activator compound is added to the polymerization reactor to activate the precursor composition. The activator compound and the impregnated precursor composition are preferably fed to the reactor through separate feed lines. The activator compound may be sprayed into the reactor in the form of a solution thereof in a hydrocarbon solvent such as isopentane, hexane, or mineral oil. This solution usually contains 2 to 30 weight percent of the activator compound. The activator compound is added to the reactor in such amounts as to provide from 10 to 400 mols, preferably from 15 to 60 mols, of activator compound per mol of titanium compound in said precursor composition. The activator compound added to the reactor, reacts, with, and activates the precursor composition in the reactor.

In the continuous fluid bed process disclosed below, discrete portions of the precursor composition impregnated on the carrier are continuously fed to the reactor, with discrete portions of activator compound needed to activate the precursor composition, during the continuing polymerization process in order to replace active catalyst sites that are expended during the course of the reaction.

The drawing shows a gas phase fluid bed reactor for carrying out the process of the present invention.

The polymerization reaction is conducted by contacting a stream of the monomer(s), in the fluid bed process described below, and substantially in the absence of catalyst poisons such as moisture, oxygen, carbon monoxide, carbon dioxide and acetylene, with a catalytically effective amount of the activated precursor composition (the catalyst) impregnated on a carrier at a temperature and at pressure sufficient to initiate the polymerization reaction.

A fluidized bed reaction system which can be used in the practice of the process of the present invention is illustrated in Figure 1. With reference thereto the reactor 10 consists of a reaction zone 12 and a velocity reduction zone 14.

The reaction zone 12 comprises a bed of growing polymer particles, formed polymer particles and a minor amount of catalyst particles fluidized by the continuous flow of polymerizable and modifying gaseous components in the form of make-up feed and recycle gas through the reaction zone. To maintain a viable fluidized bed, the mass gas flow rate through the bed must be above the minimum flow required for fluidization, and preferably from 1.5 to 10 times $G_{mf}$ and more preferably from 3 to 6 times $G_{mf}$. $G_{mf}$ is used in the accepted form as the abbreviation for the minimum mass gas flow required to achieve fluidization. C.Y. Wen and Y.H. Yu, "Mechanics of Fluidization", Chemical Engineering Progress Symposium Series, Vol. 62, p. 100—111 (1966).

It is essential that the bed always contains particles to prevent the formation of localized "hot spots" and to entrap and distribute the particulate catalyst throughout the reaction zone. On start up, the reactor is usually charged with a base of particulate polymer particles before gas flow is initiated. Such particles may be identical in nature to the polymer to be formed or different therefrom. When different, they are withdrawn with the desired formed polymer particles as the first product. Eventually, a fluidized bed of the desired polymer particles supplants the start-up bed.

The impregnated precursor composition used in the fluidized bed is preferably stored for service in a reservoir 32 under a blanket of a gas which is inert to the stored material, such as nitrogen or argon.

Fluidization is achieved by a high rate of gas recycle to and through the bed, typically in the order of 50 times the rate of feed of make-up gas. The fluidized bed has the general appearance of a dense mass of viable particles in possible free-vortex flow as created by the percolation of gas through the bed. The pressure drop through the bed is equal to or slightly greater than the mass of the bed divided by the cross-sectional area. It is thus dependent on the geometry of the reactor.

Make-up gas is fed to the bed at a rate equal to the rate at which particulate polymer product is withdrawn. The composition of the make-up gas is determined by a gas analyzer 16 positioned above the bed. The gas analyzer determines the composition of the gas being recycled and the composition of the make-up gas is adjusted accordingly to maintain an essentially steady state gaseous composition within the reaction zone.

To ensure complete fluidization, the recycle gas and, where desired, part of the make-up gas are returned to the reactor at point 18 below the bed. There exists a gas distribution plate 20 above the point of return to aid fluidizing the bed.

The portion of the gas stream which does not react in the bed constitutes the recycle gas which is removed from the polymerization zone, preferably by passing it into a velocity reduction zone 14 above the bed where entrained particles are given an opportunity to drop back into the bed. Particle return may be aided by a cyclone 22 which may be part of the velocity reduction zone or exterior thereto. Where desired, the recycle gas may then be passed through a filter 24 designed to remove small particles at high gas flow rates to prevent dust from contacting heat transfer surfaces and compressor blades.

The recycle gas is then compressed in a compressor 25 and then passed through a heat exchanger 26 wherein it is stripped of heat of reaction before it is returned to the bed. By constantly removing heat of reaction, no noticeable temperature gradient appears to exist within the upper portion of the bed. A temperature gradient will exist in the bottom of the bed in a layer of 15 to 30 cm (6 to 12 inches), between the temperature of the inlet gas and the temperature of the remainder of the bed. Thus, it has been observed that the bed acts to almost immediately adjust the temperature of the recycle gas above this bottom layer of the bed zone to make it conform to the temperature of the remainder of the bed thereby maintaining itself at an essentially constant temperature under steady conditions. The recycle is then returned to the reactor at its base 18 and to the fluidized bed through distribution plate 20. The compressor 25 can also be placed upstream of the heat exchanger 26.

The distribution plate 20 plays an important role in the operation of the reactor. The fluidized bed contains growing and formed particulate polymer particles as well as catalyst particles. As the polymer particles are hot and possibly active, they must be prevented from settling, for if a quiescent mass is allowed to exist, any active catalyst contained therein may continue to react and cause fusion. Diffusing recycle gas through the bed at a rate sufficient to maintain fluidization at the base of the bed is, therefore, important. The distribution plate 20 serves this purpose and may be a screen, slotted plate, perforated plate, a plate of the bubble cap type and the like. The elements of the plate may all be stationary, or the plate may be of the mobile type disclosed in US—A—3,298,792. Whatever its design, it must diffuse the recycle gas through the particles at the base of the bed to keep them in a fluidized condition, and also serve to support a quiescent bed of resin particles when the reactor is not in operation. The mobile elements of the plate may be used to dislodge any polymer particles entrapped in or on the plate.

Hydrogen may be used as a chain transfer agent in the polymerization reaction of the present invention. The ratio of hydrogen/ethylene employed will vary between 0 to 2.0 moles of hydrogen per mole of the monomer in the gas stream.

Any gas inert to the catalyst and reactants can also be present in the gas stream. The activator compound is preferably added to the gas recycle system at the hottest portion thereof. Addition into the recycle line, therefore, downstream from the heat exchanger is preferred, as from dispenser 27 through line 27A.

Compounds of the structure $Zn(R_a)(R_b)$, wherein $R_a$ and $R_b$ are the same or different $C_1$ to $C_{14}$ aliphatic or aromatic hydrocarbon radicals, may be used in conjunction with hydrogen, with the catalysts of the present invention as molecular weight control or chain transfer agents, that is, to increase the melt index values of the copolymers that are produced. From 0 to 50, and preferably from 20 to 30 moles of the Zn compound would be used in the gas stream in the reactor per mol of titanium compound in the reactor. The zinc compound would be introduced into the reactor preferably in the form of a dilute solution (2 to 10 weight percent) in a hydrocarbon solvent or absorbed on a solid carrier material, such as silica, in amounts of from 10 to 50 weight percent. These compositions tend to be pyrophoric. The zinc compound may be added into the recycle gas stream from a feeder adjacent to feeder 27.

It is essential to operate the fluid bed reactor at a temperature below the sintering temperature of the polymer particles. To insure that sintering will not occur, operating temperatures below the sintering temperature are desired. For the production of ethylene polymers in the process of the present invention an operating temperature of from 90 to 150°C is preferably used to prepare products having a density of from 0.95 to 0.97 g/cm$^3$.

The fluid bed reactor is operated at pressures of up to 69 bar (1000 psi.), and is preferably operated at a pressure of from 10.3 to 24 bar (150 to 350 psi), with operation at the higher pressures in such ranges favoring heat transfer since an increase in pressure increases the unit volume heat capacity of the gas.

The impregnated precursor composition is injected into the bed at a rate equal to its consumption at a point 30 which is above the distribution plate 20. A gas which is inert to the impregnated precursor composition such as nitrogen or argon is used to carry the composition into the bed. Injecting the precursor composition at a point above the distribution plate is an important feature of this invention. Since the catalysts formed from the impregnated precursor composition used in the practice of the invention are highly active, injection into the area below the distribution plate may cause polymerization to begin there and eventually cause plugging of the distribution plate. Injection into the viable bed, instead, aids in distributing the catalyst throughout the bed and tends to preclude the formation of localized spots of high catalyst concentration which may result in the formation of "hot spots".

Under a given set of operating conditions, the fluidized bed is maintained at essentially a constant height by withdrawing a portion of the bed as product at a rate equal to the rate of formation of the particulate polymer product. Since the rate of heat generation is directly related to product formation, a measurement of the temperature rise of the gas across the reactor (the difference between inlet gas temperature and exit gas temperature) is determinative of the rate of particulate polymer formation at a constant gas velocity.

The particulate polymer product is preferably continuously withdrawn at a point 34 at or close to the distribution plate 20 and in suspension with a portion of the gas stream which is vented before the particles settle to preclude further polymerization and sintering when the particles reach the ultimate collection zone. The suspending gas may also be used, as mentioned above, to drive the product of one reactor to another reactor.

The particulate polymer product is conveniently and preferably withdrawn through the sequential operation of a pair of timed valves 36 and 38 defining a segregation zone 40. While valve 38 is closed. Valve 38 is opened to emit a plug of gas and product to the zone 40 between it and valve 36 which is then closed. Valve 38 is then opened to deliver the product to an external recovery zone. Valve 38 is then closed to await the next product recovery operation.

Finally, the fluidized bed reactor is equipped with an adequate venting system to allow venting the bed during start up and shut down. The reactor does not require the use of stirring means and/or wall scraping means.

The highly active impregnated catalyst system of this invention appears to yield a fluid bed product having an average particle size between 0.5 to 1.25 mm (0.02 to 0.05 inches) and preferably 0.5 to 1.0 mm (0.02 to 0.04 inches) wherein catalyst residue is unusually low. The polymer particles have a relatively round particle shape and a relatively low level of fines (<125 μm) i.e., ≤4 percent by weight.

The feed stream of gaseous monomer, with or without inert gaseous diluents, is fed into the reactor to achieve a space time yield of 32 to 160 kg/h/$m^3$ (2 to 10 pounds/hour/cubic foot) of bed volume.

The polymer directly recovered from the polymerization reactor is, in granular form. ("Virgin" polymer)

The following Examples are designed to illustrate the process of the present invention and are not intended as a limitation upon the scope thereof.

The properties of the polymers produced in the Examples were determined by the following test methods:

Density ASTM D—1505

A plaque is made and conditioned for one hour at 120°C to approach equilibrium crystallinity and is then quickly cooled to room temperature. Measurement for density is then made in a density gradient column.

Melt Index (MI):

ASTM D—1238—Condition E—Measured at 190°C—reported as grams per 10 minutes.

Flow Rate (HLMI):

ASTM D—1238—Condition F—Measured at 10 times the weight used in the melt index test above.

$$\text{Melt Flow Ratio (MFR)} = \frac{\text{Flow Rate}}{\text{Melt Index}}$$

Productivity

A sample of the resin product is ashed, and the weight percent of ash is determined; since the ash is essentially composed of the catalyst, the productivity is thus the kg of polymer produced per kg of total catalyst consumed. The amount of Ti, Mg and Cl in the ash are determined by elemental analysis.

Bulk density:

The resin is poured via 9.5 mm (3/8") diameter funnel into a 100 ml graduated cylinder to 100 ml line without shaking the cylinder and weighed by difference.

Average Particle Size:

This is calculated from sieve analysis data measured according to ASTM—D—1921 Method A using a 500 g sample. Calculations are based on weight fractions retained on the screens.

Preparation of catalyst

a) Preparation of impregnated precursor

In a 12 liter flask equipped with a mechanical stirrer are placed 41.8 g (0.439 mol) anhydrous $MgCl_2$ and 2.5 l tetrahydrofuran (THF). To this mixture, 27.7 g (0.184 mol) $TiCl_4$ is added dropwise over 1/2 hour. It may be necessary to heat the mixture to 60°C. for about 1/2 hour in order to completely dissolve the material.

The precursor composition may be isolated by recovering it from the solution in THF by crystallization or precipitation. It may also be analyzed at this point for Mg and Ti content since some of the Mg and/or Ti compound may have been lost during the isolation of the precursor composition.

The empirical formulas used herein in reporting the precursor compositions are derived by assuming that the Mg and the Ti still exist in the form of the compounds in which they were first added to the electron donor compound. The amount of electron donor is determined by chromatography.

The impregnated precursor composition is prepared by adding 500 g of porous silica, dehydrated at 800°C, optionally treated with 4 to 8 wt.% triethyl aluminum, to the solution prepared above and the mixture is stirred for 1/4 hour. The mixture is dried with a $N_2$ purge at 60°C. for about 3—5 hours to provide a dry free flowing powder having the particle size of the silica. The absorbed precursor composition has the formula:

$$TiMg_{3.0}Cl_{10}(THF)_{6.7}$$

[In this formula the calculated value of q is 6.5 in excellent agreement with the 6.7 value measured experimentally.]

This procedure can be used to prepare the impregnated precursor on silica treated with triethyl aluminum. Silica, previously dehydrated at 800°C is treated with triethyl aluminum to produce a silica modified with 4 to 8 weight percent triethyl aluminum.

b) Preparation of impregnated precursor from preformed precursor composition

In a 12 liter flask equipped with a mechanical stirrer, 146 g of precursor composition is dissolved in 2.5 liters dry THF. The solution may be heated to 60°C in order to facilitate dissolution. 500 g of porous silica, dehydrated at 800°C, is added and the mixture is stirred for 1/4 hour. The mixture is dried with a $N_2$ purge at $\leq$60°C for about 3—5 hours to provide a dry free-flowing powder having the particle size of the silica.

c) Activation procedure

The activator compound is fed to the polymerization reactor for the purpose of activating the precursor composition. It is fed into the reactor as a dilute solution in a hydrocarbon solvent such as isopentane. These dilute solutions contain 5 to 30% by volume of the activator compound.

The activator compound is added to the polymerization reactor so as to maintain the Al/Ti ratio in the reactor at a level of $\geq$10 to 400:1 and preferably of 15 to 60:1.

Examples 1 to 6

Ethylene was homopolymerized in each of this series of Examples with catalyst formed as described above. The silica impregnated precursor composition contained 20 to 35 percent by weight (percent loading) of precursor composition. The activation of the precursor composition in the polymerization reactor was accomplished with triethyl aluminum in a five weight percent isopentane solution so as to provide the activated catalyst in the reactor with an Al/Ti mol ratio of 15—40.

Each of the polymerization reactions was continuously conducted for >1 hour after equilibrium was reached and under a pressure of 22 bar (300 psig) and a gas velocity of 3 to 4 times $G_{mf}$ in a fluid bed reactor system at a space time yield of 48 to 96 kg/h/m$^3$ (3 to 6 lbs/hr/ft$^3$) of bed space. The reaction system was as described above. It has a lower section 3 m (10 feet) high and 34 cm (13 1/2 inches) in (inner) diameter, and an upper section which was 4.8 m (16 feet) high and 49.6 cm (23 1/2 inches) in (inner) diameter.

Table I below lists the percent loading of the precursor composition, type of silica, reaction temperature, $H_2/C_2$ mol ratio as well as melt index, melt flow ratio, density, residual titanium, average particle size, bulk density, and fines of the granular resins made in these Examples.

TABLE I
Reaction conditions using catalyst of the present invention

| Example | Percent loading of the precursor composition | Silica treated with triethyl aluminum (wt.%) | Temp. (°C) | $H_2/C_2$ ratio | Mi g/10 min | MFR | Density g/cm³ |
|---|---|---|---|---|---|---|---|
| 1 | 20 | Yes (8) | 95 | 0.56 | 13 | 26 | 0.970 |
| 2 | 20 | Yes (8) | 105 | 0.37 | 9.3 | 24 | 0.970 |
| 3 | 25 | Yes (4) | 103 | 0.38 | 6.8 | 25 | 0.968 |
| 4 | 30 | Yes (4) | 103 | 0.45 | 8.4 | 26 | 0.969 |
| 5 | 30 | No | 103 | 0.42 | 9.9 | 25 | 0.970 |
| 6 | 35 | Yes (4) | 103 | 0.42 | 9.2 | 28 | 0.970 |

TABLE I (cont.).

| Example | Residual Ti ppm | Average particle size mm | (in.) | Bulk density g/cm³ | (lbs/ft³) | Fines 125 µm wt.% |
|---|---|---|---|---|---|---|
| 1 | 10 | 0.79 | (0.031) | 0.45 | (28) | 1.6 |
| 2 | 9 | 0.76 | (0.030) | 0.42 | (26) | 1.6 |
| 3 | 5 | 0.61 | (0.024) | 0.40 | (25) | 3.5 |
| 4 | 7 | 0.66 | (0.026) | 0.42 | (26) | 3.8 |
| 5 | 12 | 0.79 | (0.031) | 0.35 | (22) | 2.2 |
| 6 | 17 | 0.94 | (0.037) | 0.35 | (22) | 1.2 |

Comparative Examples A and B

A catalyst was prepared according to the procedure as found in EPC Application 79 100 957.4, as follows:

d) Preparation of precursor composition

In a 5 liter flask equipped with a mechanical stirrer, 16.0 g (0.168 mol) of anhydrous $MgCl_2$ was mixed with 850 ml of pure tetrahydrofuran under nitrogen. The mixture was stirred at room temperature (~25°C) while 13.05 g (0.069 Mol) of $TiCl_4$ was added dropwise. After complete addition, the contents of the flask were heated to reflux for about 1/2 to 1 hour to dissolve the solids. The system was cooled to room temperature and 3 liters of pure n-hexane was slowly added over a period of 1/4 hour. A yellow solid precipitated. The supernatant was decanted and the solids were washed, 3 times with one liter of n-hexane. The solids were filtered and dried in a rotating evaporating flask at 40—60°C to give 55 g of solid precursor composition.

e) Activation procedure

The activation is conducted in such a way that the precursor composition is only partially activated prior to the introduction thereof into the polymerization reactor, and then the remainder of the activation process is completed within such reactor.

400 grams of silica is charged to a mixing vessel or tank. The silica is then admixed with sufficient amounts of isopentane to provide a slurry system. This usually requires about 4 to 7 ml of diluent per gram of inert carrier. 100 g of the precursor composition is then charged to the mixing vessel and thoroughly admixed with the slurry composition. The precursor composition has an elemental titanium content of 1±0.1 millimole of Ti per gram of precursor composition. About 5.0 equivalent of triethyl aluminum is added to the contents of the mixing vessel so as to partially activate the precursor composition. The triethyl aluminum is added to the mixing vessel in the form of a solution which contains 20 weight percent of the triethyl aluminum in hexane. The activation is accomplished by thoroughly mixing and contacting the triethyl aluminum compound with the precursor composition. All of the operations described above are conducted at room temperature, and at atmospheric pressure in an inert atmosphere.

The resulting slurry is then dried under a purge of dry inert gas such as nitrogen or argon, at

atmospheric pressure at a temperature of ≤60°C to remove the hydrocarbon diluent. This process usually requires about 3 to 5 hours. The resulting product is in the form of a dry free-flowing particulate material wherein the partially activated precursor composition is uniformly blended with the inert carrier. The dried non-pyrophoric product is stored under an inert gas.

The partially activated precursor composition is fed to the polymerization reactor and completely activated in the reactor by the activator compound. The activator compound is fed into the reactor as a dilute solution in a hydrocarbon solvent such as isopentane. These dilute solutions contain 5 to 30% by volume of the activator compound.

The activator compound is added to the polymerization reactor so as to maintain the Al/Ti ratio in the reactor at a level of 10 to 400:1 and preferably of 15 to 60:1.

Ethylene was homopolymerized with catalyst formed as described above in part a) and c) (according to the present invention), and also with catalyst formed as described above in procedure d) and e) (according to EPC 79 100 957.4). The silica impregnated precursor composition formed by procedure a) and c) contained 20 percent by weight of precursor composition. This precursor composition as well as the partially activated precursor composition formed in procedure d) and e) were activated in the polymerization reactor with triethyl aluminum as a five weight percent isopentane solution so as to provide the activated catalyst in the reactor with an Al/Ti mol ratio of 30 to 40. Each of the polymerization reactions was continuously conducted as described previously.

Table II below lists the melt index, density, bulk density, particle size, percent fines and plasticizing time of the granular resin as obtained from the reactor produced with the catalyst of the above mentioned Application 79 100 957.4 (Example A) and the catalyst produced by the process of the present invention (Example B).

TABLE II

Comparison of properties of the polyethylene

| Example | A | B |
|---|---|---|
| MI, g/10 min | 8.4 | 8.4 |
| Density, g/cm$^3$ | 0.968 | 0.970 |
| Bulk Density, g/cm$^3$ (lb/ft$^3$) | 0.48 (30) | 0.41 (25.6) |
| Particle size mm (inches) | 0.56 (0.022) | 0.66 (0.026) |
| Percent fines, <125 μm | 10.4 | 3.8 |
| Plasticizing time[(1)], sec. | 17.5 | 12.0 |

[(1)] A measure of time necessary to prepare molten polymer from the resin in a standard injection molding machine.

The data of this table show that materials produced with present invention contain less fines and exhibit lower plasticizing times.

Comparative Examples C and D

A catalyst was prepared according to the procedure as found in EPC-Application 79 100 958.2, as follows:

f) Preparation of impregnated precursor composition

The impregnated precursor composition was prepared by the method as described above in procedure a).

g) Activation procedure

The desired weights of the impregnated precursor composition and activator compound are added to a mixing tank with sufficient amounts of anhydrous aliphatic hydrocarbon diluent such as isopentane to provide a slurry system.

The activator compound and precursor composition are used in such amounts as to provide a partially activated precursor composition which has an Al/Ti ratio of >0 to ≤10:1 and preferably of 4 to 8:1.

The contents of the slurry system are then thoroughly mixed at room temperature and at atmospheric pressure for about 1/4 to 1/2 hour. The resulting slurry is then dried under a purge of dry inert gas such as nitrogen or argon, at atmospheric pressure and at a temperature of 65±10°C. to remove the hydrocarbon diluent. This process usually requires about 3 to 5 hours. The resulting catalyst is in the form of a partially activated precursor composition which is impregnated within the pores of the silica. The material is a free flowing particulate material having the size and shape of the silica. It is not pyrophoric unless the aluminum

alkyl content exceeds a loading of 10 weight percent. It is stored under a dry inert gas as nitrogen or argon prior to future use. It is now ready for use by being injected into, and fully activated within the polymerization reactor.

In order to complete the activation of the partially activated precursor composition, additional activator compound is fed to the polymerization reactor as a dilute solution in a hydrocarbon solvent such as isopentane. These dilute solutions contain 5 to 30% by volume of the activator compound.

The activator compound is added to the polymerization reactor so as to maintain the Al/Ti ratio in the reactor at a level of ≥10 to 400:1 and preferably of 15 to 60:1.

Ethylene was homopolymerized in each of Examples C and D with catalyst formed as described by Procedure f) and g), above. The silica impregnated precursor composition (q calculated=6.5; q measured=6.5) contained 15 (Example C) and 20 (Example D) percent by weight (percent loading) of precursor composition. The partially activated precursor composition (Al/Ti=5) was completely activated in the polymerization reactor with triethyl aluminum so as to provide the activated catalyst in the reactor with a total Al/Ti mol ratio of 30 to 40. Each of the polymerization reactions was conducted for >1 hour after equilibrium was reached and under a pressure of about 22 bar (300 psig), and temperature of 105°C, according to the procedure as previously described.

Table III below lists percent loading of the precursor composition, $H_2/C_2$ mol ratio as well as melt index, melt flow ratio, density, residual titanium, average particle size and bulk density of the granular resins made according to the process of Application 79 100 958.2.

TABLE III

Properties of polyethylene prepared with catalysts of the prior art

| Example | C | D |
|---|---|---|
| Percent loading of the precursor composition | 15 | 20 |
| $H_2/C_2$ ratio | 0.358 | 0.381 |
| MI, g/10 min | 6.2 | 7.1 |
| MFR | 26.7 | 25.8 |
| Density, g/cm³ | 0.969 | 0.969 |
| Residual Ti, ppm | 25 | 28 |
| Average particle size, mm (in.) | 0.48 (0.019) | 0.50 (0.02) |
| Bulk Density g/cm³ (lbs/cu ft) | 0.46 (28.7) | 0.45 (28.1) |

The data of Table III show that the polyethylene produced in the 2 comparative tests contains much higher residual titanium than the polyethylene produced with the catalyst of the present invention (see Examples 1 to 6).

## Claims

1. A process for polymerizing ethylene employing a catalyst composition prepared by forming a precursor composition from a magnesium compound, titanium compound and electron donor compound, and then activating the precursor composition with an organoaluminum compound to form the catalyst, wherein the polymerization is conducted continuously in a fluid bed reactor at a temperature of 30 to 115°C under a pressure of <69 bar (<1000 psi) in the gas phase to produce ethylene homopolymers or ethylene copolymers containing ≥98 mol percent of ethylene and ≤2 mol percent of one or more $C_3$ to $C_8$ α-olefins at a productivity of ≤50,000 kg of polymer per kg of Ti, said polymer being produced in granular form and having a density of ≥0.95 to ≤0.97 g/cm³ and a melt flow ratio of ≥22 to ≤32, by contacting ethylene, or a mixture of ethylene and at least one $C_3$ to $C_8$ α-olefin, optionally in the presence of hydrogen, with particles of an activated precursor composition, said precursor composition being impregnated in an inert porous carrier in a weight ratio of 0.033:1 to 1:1 and being activated with ≥10 to 400 mols of activator compound per mol of titanium compound in said precursor composition, said activator compound having the formula

$$AlR_3$$

wherein the R's are the same or different, and are $C_1$ to $C_{14}$ saturated hydrocarbon radicals, characterized in that activation of said precursor composition is effected in the polymerization reactor by feeding dry solid impregnated precursor composition into the reactor and adding activator compound to said reactor to effect said activation, and in that said precursor composition has the formula

$$Mg_mTi(OR)_nX_p[ED]_q$$

wherein R is a $C_1$ to $C_{14}$ aliphatic or aromatic hydrocarbon radical, or COR' wherein R' is a $C_1$ to $C_{14}$ aliphatic or aromatic hydrocarbon radical,

X is selected from the group consisting of Cl, Br, I, or mixtures thereof,

ED is a liquid organic electron donor compound in which said precursor composition and the Ti and Mg component thereof are soluble or partially soluble and which is selected from the group consisting of alkyl esters of aliphatic and aromatic carboxylic acids, aliphatic ethers, cyclic ethers and aliphatic ketones,

m is ≥0.5 to ≤56,

n is 0, 1 or 2,

p is ≥2 to ≤116 and

q is =1.5m+2.

2. A process as in claim 1 in which ethylene homopolymer is produced.

3. A process as in claim 1 or 2, in which said magnesium compound comprises $MgCl_2$.

4. A process as in any one of claims 1 to 3 in which said electron donor compound comprises at least one ether, preferably tetrahydrofuran.

5. A process as in any one of claims 1 to 4 in which said titanium compound comprises $TiCl_4$.

6. A process as in any one of claims 1 to 5 wherein the inert porous carrier comprises silica.

7. A process as in claim 6 wherein the silica is treated with at least one activator compound of the formula

$$AlR_3$$

wherein the R's are the same or different, and are $C_1$ to $C_{14}$ saturated hydrocarbon radicals.

## Patentansprüche

1. Verfahren zum Polymerisieren von Ethylen unter Verwendung einer Katalysatorzusammensetzung, hergestellt durch Bildung einer Vorläuferzusammensetzung aus einer Magnesiumverbindung, Titanverbindung und Elektronenspenderverbindung und anschließende Aktivierung der Vorläuferzusammensetzung mit einer Organoaluminiumverbindung zur Bildung des Katalysators, in welchem die Polymerisation kontinuierlich in einem Fließbettreaktor bei einer Temperatur von 30 bis 115°C unter einem Druck von <69 bar (<100 psi) in der Gasphase zur Bildung von Ethylenhomopolymerisaten oder Ethylencopolymerisaten durchgeführt wird, die ≥98 Mol-% Ethylen und ≤2 Mol-% eines oder mehrerer $C_3$ bis $C_8$ α-Olefine bei einer Produktivität von ≥50 000 kg Polymerisat pro kg Ti enthalten, wobei das Polymerisat in granularer Form und mit einer Dichte von ≥0.95 bis ≤0,97 g/cm$^3$ und einem Schmelzflußverhältnis von ≥22 bis ≤32 hergestellt wird, indem man Ethylen oder eine Mischung aus Ethylen und mindestens einem $C_3$ bis $C_8$ α-Olefin, wahlweise in Anwesenheit von Wasserstoff, mit Teilchen einer aktivierten Vorläuferzusammensetzung in Berührung bringt, wobei die Vorläuferzusammensetzung in einem inerten porösen Träger in einem Gewichtsverhältnis von 0.033:1 bis 1:1 imprägniert und mit ≥10 bis 400 Mol Aktivatorverbindung pro Mol Titanverbindung in dieser Vorläuferzusammensetzung aktiviert ist und die Aktivatorverbindung die Formel

$$AlR_3$$

hat, in welcher die Substituenten R gleich oder verschieden sind und gesättigte $C_1$ bis $C_{14}$ Kohlenwasserstoffreste sind, dadurch gekennzeichnet, daß die Aktivierung der Vorläuferzusammensetzung im Polymerisationsreaktor durchgeführt wird, indem man die trockene feste imprägnierte Aktivatorzusammensetzung zur Durchführung dieser Aktivierung in den Reaktor einführt und daß die Vorläuferzusammensetzung die Formel

$$Mg_mTi(OR)_nX_p[ED]_q$$

hat, in welcher R ein aliphatischer oder aromatischer $C_1$ bis $C_{14}$ Kohlenwasserstoffrest oder COR' ist, worin R' ein aliphatischer oder aromatischer Kohlenwasserstoffrest ist,

X aus der aus Cl, Br, J oder Mischungen derselben bestehenden Gruppe ausgewählt ist,

ED eine flüssige organische Elektronenspenderverbindung ist, in welcher die Vorläuferzusammensetzung und die Ti und Mg Komponente derselben löslich oder teilweise löslich sind und die aus der aus Alkylestern aliphatischer und aromatischer Carbonsäuren, aliphatischen Ethern, cyclischen Ethern und aliphatischen Ketonen bestehenden Gruppe ausgewählt ist,

m ≥0,5 bis ≤56 ist,

n 0, 1 oder 2 ist,

p ≥2 bis ≤166 ist und

q=1,5 m+2 ist.

2. Verfahren nach Anspruch 1, in welchem Ethylenhomopolymerisat hergestellt wird.

3. Verfahren nach Anspruch 1 oder 2, in welchem die Magnesiumverbindung $MgCl_2$ umfaßt.

4. Verfahren nach einem der Ansprüche 1 bis 3, in welchem die Elektronenspenderverbindung mindestens einen Ether, vorzugsweise Tetrahydrofuran, umfaßt.

5. Verfahren nach einem der Ansprüche 1 bis 4, in welchem die Titanverbindung $TiCl_4$ umfaßt.

6. Verfahren nach einem der Ansprüche 1 bis 5, in welchem der inerte poröse Träger Kieselsäure umfaßt.

7. Verfahren nach Anspruch 6, in welchem die Kieselsäure mit mindestens einer Aktivatorverbindung der Formel

$$AlR_3$$

behandelt ist, in welcher die Substituenten R gleich oder verschieden sind und gesättigte $C_1$ bis $C_{14}$ Kohlenwasserstoffreste sind.

**Revendications**

1. Procédé de polymérisation d'éthylène utilisant une composition de catalyseur préparée par formation d'une composition de précurseur à partir d'un composé de magnésium, d'un composé de titane et d'un composé donneur d'électrons, puis activation de la composition de précurseur avec un composé organique d'aluminium pour former le catalyseur, dans lequel la polymérisation est conduite en continu dans un réacteur à lit fluide à une température de 30 à 115°C sous une pression inférieure à 69 bars (<1000 lb/in$^2$) en phase gazeuse pour produire des homopolymères d'éthylène ou des copolymères d'éthylène contenant une quantité égale ou supérieure à 98 moles pourcent d'éthylène et égale ou inférieure à 2 moles pour-cent d'une ou plusieurs alpha-oléfines en $C_3$ à $C_8$ à une productivité égale ou supérieure à 50 000 kg de polymère par kg de Ti, ledit polymère étant produit sous une forme granulaire et ayant une densité allant d'une valeur égale ou supérieure à 0,95 g/cm$^3$ à une valeur égale ou inférieure à 0,97 g/cm$^3$ et un rapport d'écoulement à l'état fondu allant d'une valeur égale ou supérieure à 22 à une valeur égale ou inférieure à 32, par mise en contact d'éthylène ou d'un mélange d'éthylène et d'au moins une alpha-oléfine en $C_3$ à $C_8$, éventuellement en présence d'hydrogène, avec des particules d'une composition de précurseur activé, ladite composition de précurseur étant imprégnée dans un support poreux inerte dans un rapport en poids de 0,033:1 à 1:1 et étant activée avec une quantité allant de 10 ou plus de 10 à 400 moles de composé activateur par mole de composé de titane dans ladite composition de précurseur, ledit composé activateur répondant à la formule

$$AlR_3$$

dans laquelle les groupes R sont égaux ou différents et sont des radicaux hydrocarbonés saturés en $C_1$ à $C_{14}$, caractérisé en ce que l'activation de ladite composition de précurseur est effectuée dans le réacteur de polymérisation par introduction de composition de précurseur imprégnée solide sèche dans le réacteur et addition de composé activateur audit réacteur pour effectuer ladite activation, et en ce que la composition de précurseur répond à la formule

$$Mg_mTi(OR)_nX_p[ED]_q$$

dans laquelle R est un radical hydrocarboné aliphatique ou aromatique en $C_1$ à $C_{14}$ ou un groupe COR', dans lequel R' est un radical hydrocarboné aliphatique ou aromatique en $C_1$ à $C_{14}$, X est choisi dans le groupe comprenant Cl, Br, I, ou leurs mélanges,

ED est un composé organique liquide donneur d'électrons dans lequel ladite composition de précurseur et ses composants Ti et Mg sont solubles ou partiellement solubles et qui est choisi dans le groupe comprenant des esters alkyliques d'acides carboxyliques aliphatiques et aromatiques, d'éthers aliphatiques, d'éthers cycliques et de cétones aliphatiques,

m va d'une valeur égale ou supérieure à 0,5 à une valeur égale ou inférieure à 56,

n a la valeur 0, 1 ou 2,

p va d'une valeur égale ou supérieure à 2 à une valeur égale ou inférieure à 116 et

q a une valeur de 1,5m+2.

2. Procédé selon la revendication 1, dans lequel un homopolymère d'éthylène est produit.

3. Procédé selon la revendication 1 ou 2, dans lequel le composé de magnésium comprend $MgCl_2$.

4. Procédé selon l'une quelconque des revendications 1 à 3, dans lequel ledit composé donneur d'électrons comprend au moins un éther, de préférence le tétrahydrofuranne.

5. Procédé selon l'une quelconque des revendications 1 à 4, dans lequel ledit composé de titane comprend $TiCl_4$.

6. Procédé selon l'une quelconque des revendications 1 à 5, dans lequel le support poreux inerte comprend de la silice.

7. Procédé selon la revendication 6, dans lequel la silice est traitée avec au moins un composé activateur de formule

$$AlR_3$$

dans laquelle les groupes R sont égaux ou différents et représentent des radicaux hydrocarbonés saturés en $C_1$ à $C_{14}$.

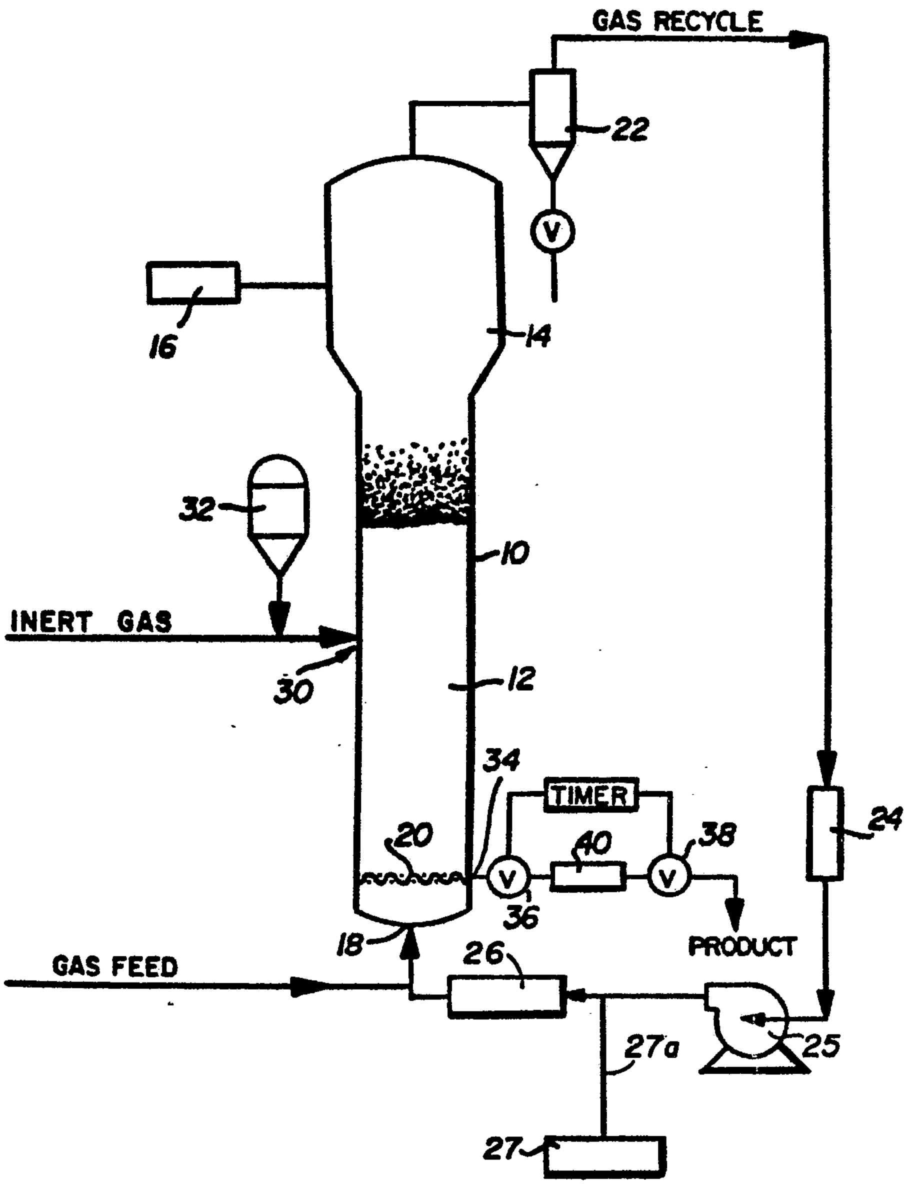
GAS RECYCLE
22
V
16
14
32
10
INERT GAS
30
12
34
TIMER
20
40
38
24
36
18
PRODUCT
26
GAS FEED
27a
25
27